(19) Europäisches Patentamt
European Patent Office
Office européen des brevets

(11) Publication number: **0 445 303 A1**

(12) **EUROPEAN PATENT APPLICATION published in accordance with Art. 158(3) EPC**

(21) Application number: **90913877.8**

(22) Date of filing: **21.09.90**

(86) International application number: **PCT/JP90/01222**

(87) International publication number: **WO 91/04281 (04.04.91 91/08)**

(51) Int. Cl.[5]: **C08F 10/00**, C08F 4/654

(30) Priority: **25.09.89 JP 246512/89**

(43) Date of publication of application: **11.09.91 Bulletin 91/37**

(84) Designated Contracting States: **BE DE FR GB IT**

(71) Applicant: **Tonen Corporation**
**1-1 Hitotsubashi, 1-Chome Chiyoda-Ku**
**Tokyo 100(JP)**

(72) Inventor: **OKANO, Tomoko Corporate Research & Dev. Lab. of Tonen Corporation 3-1, Nishitsurugaoka 1-chome Ooi-machi Iruma-gun Saitama 354(JP)**
Inventor: **CHIDA, Kanako Corporate Research & Dev. Lab. of Tonen Corporation 3-1, Nishitsurugaoka 1-chome Ooi-machi Iruma-gun Saitama 354(JP)**
Inventor: **FURUHASHI, Hiroyuki Corporate Research & Dev. Lab of Tonen Corporation 3-1, Nishitsurugaoka 1-chome Ooi-machi Iruma-gun Saitama 354(JP)**
Inventor: **NAKANO, Akira Corporate Research & Dev. Lab. of Tonen Corporation 3-1, Nishitsurugaoka 1-chome Ooi-machi Iruma-gun Saitama 354(JP)**
Inventor: **UEKI, Satoshi Corporate Research & Dev. Lab. of Tonen Corporation 3-1, Nishitsurugaoka 1-chome Ooi-machi Iruma-gun Saitama 354(JP)**

(74) Representative: **Baverstock, Michael George Douglas et al**
**BOULT, WADE & TENNANT 27 Furnival Street**
**London, EC4A 1PQ(GB)**

# (54) PROCESS FOR PRODUCING POLY--g(a)-OLEFIN.

(57) A process for producing a poly-α-olefin with high melt flowability in a high yield by using a catalyst containing an organo-silicon compound which is good in the effect of hydrogen on the melt flow rate, i.e. hydrogen response, and causes only a little reduction in the stereoregularity of the obtained polymer, said process comprising polymerizing an α-olefin in the presence of a catalyst composed of: (A) a solid catalytic component containing a metal oxide, magnesium, titanium, halogen, and an electron-donating compound as the essential ingredients, (B) an organometallic compound, and (C) an ethoxysilane compound of general formula: $RnSi(OC_2H_5)_{4-n}$, wherein R is $C_3$ to $C_{10}$ aliphatic hydrocarbyl and n is 1 or 2, having a volume of 200 to 500 $Å^3$ as calculated based on quantum chemical theory and an electron density of the oxygen atom of the ethoxy group of 0.680 to 0.800 atomic unit.

EP 0 445 303 A1

Technical Field of The Invention

This invention relates to a process for the production of poly α-olefins and particularly, it is concerned with a process for the productioon of poly-α-olefins having a high melt flow property represented by a melt flow rate of at least 50.

Technical Background

When poly α-olefins are produced using a composition comprising magnesium, titanium, a halogen and an electron-donating compoud as a main catalyst, the use of an organosilicon compound jointly with an organoaluminum compound results in improvement of the stereoregularity of the resulting polymer. However, this causes lowering of the polymerization activity simultaneously. The degree of improving the stereoregulairty and the ratio of lowering the polymerization activity largely depend on the variety of the organosilicon compounds used. In general, a silicon compound having an aromatic group has good properties, but depending on the object of using the polymer, the silicon compound forms an undesirable material.

On the other hand, in order to improve the melt flow property of a polymer, there has been employed a method of increasing the melt flow rate of the polymer with hydrogen, by which the stereoregularity of the polymer, however, is ordinarily lowered.

Of late, there has been proposed a process for producing a propylene block copolymer with an MFR of 10 g/10 min or more in the presence of a catalyst system composed of (A) a solid titanium catalytic component containing magnesium, titanium, a halogen and a polybasic carboxylic aicd esters, as essential components, prepared by contacting a magnesium compound, titanium compound and polybasic carboxylic acid, (B) an organoaluminum compound catalytic component and (C) an organosilicon compound catalytic component represented by the general formula $SiR^1{}_m(OR^2)_{4-m}$ (Japanese Patent Laid-Open Publication No. 27517/1988). However, this process is a process for producing a specified propylene block copolymer having only such an embodiment that copolymers each having an MFR of less than 40 g/10 min are produced.

Furthermore, another process has been known comprising polymerizing or copolymerizing olefins in the presence of a catalyst composed of the components (A) and (B) as described in Japanese Patent Laid-Open Publication No. 27517/1988 and (C) an organosilicon compound catalytic component represented by the general formula $SiR^1R^2(OR^3)_2$. In this process, the stereoregularity of the polymer is not so lowered even if the melt flow rate of the polymer is changed by the use of hydrogen, but the organosilicon compound substantially used therein is a methoxy group-containing silicon compound and the resulting polymer has an MFR f less than 40 g/10 min (Japanese Patent Laid-Open Publication No. 223008/1988).

The inventors have made various studies for the purpose of providing a process for producing poly α-olefins having a high melt flow property with a high yield using a catalyst composed of a combination with an organosilicon compound having a good effect on the melt flow rate with hydrogen, i.e. good hydrogen response without lowering the stereoregularity of the polymer to a large extent and consequently, have found that a specified polymerization catalyst using, as one component, an ethoxy group-containing silicon compound in which the molecular volume is somewhat large and the electron density of oxygen atom in the ethoxy group is in a specified range is capable of exhibiting high activity and producing poly α-olefins each having high stereoregularity,and has a good hydrogen response and such a feature that the stereoregularity of the polymer is hardly lowered even if using a large amount of hydrogen. Disclosure of the Invention

That is, the gist of the present invention consists in a process for the production of poly α-olefins comprisng polymerizing α-olefins in the presence of a catalyst composed of (A) a solid catalsyt compnent comprising, as essential components, a metal oxide, magnesium, titanium, a halogen and an electron-donating compound, (B) an organometal compound and (C) an ethoxy group-containing silane compound represented by the general formula $R_n Si(OC_2H_5)_{4-n}$ wherein R is an aliphatic hydrocarbon group with 3 to 10 carbon atoms and n is 1 or 2 and havinga volume, calculated by the quantum chemistry calculation, of 200 to 500 $A^3$ and an electron density of oxygen atoms in the ethoxy group, calculated similarly, ranging from 0.680 to 0.800 A. U. (atomic unit).

Solid Catalyst Component

A solid component (hereinafter referred to as Component A) used in the present invention comprises, as essential components, a metal oxide, magnesium, titanium, a halogen and an electron-donating compound, and can ordinarily be prepared by contacting, a metal oxide, a magnesium compound, titanium

compound and electron-donating compound, optionally with a halogen-containing compound in a case where each of these compounds is free from halogens.

(1) Metal Oxides

The metal oxide used in the second invention includes oxides of Group II to IV elements of Periodic Table, for example, $B_2O_3$, MgO, $Al_2O_3$, $SiO_2$, CaO, $TiO_2$, ZnO, $ZrO_2$, $SnO_2$, BaO, $ThO_2$, etc. Above all, $B_2O_3$, MgO, $Al_2O_3$, $SiO_2$, $TiO_2$ and $ZrO_2$ are preferably used and in particular, $SiO_2$ is most preferable. Furthermore, there can be used composite oxides containing these metal ox ides can be used, for example, $SiO_2$-MgO, $SiO_2$-$Al_2O_3$, $SiO_2$-$TiO_2$, $SiO_2$-$V_2O_5$, $SiO_2$-$Cr_2O_3$ and $SiO_2$-$TiO_2$-MgO.

These metal oxides can ordinarily be used in the form of powder. Since the size and shape of the powder often affects those of the resulting polymer, it is desired to suitably control them. Preferably, the metal oxides are calcined at a high temperature as more as possible so as to remove harmful materials before use and handled not so as to be in contact with the air.

(2) Magnesium Compounds

The magnesium compound is represented by the general formula $MgR^1R^2$ wherein $R^1$ and $R^2$ are, same or different, hydrocarbon groups, OR groups wherein R is a hydrocarbon group, or halogen atoms. Specifically, the hydrocarbon groups of R' and $R^2$ include alkyl, cycloalkyl, aryl and aralkyl groups containing 1 to 20 carbon atoms and R of the OR groups include alkyl, cycloalkl, aryl and aralkyl groups containing 1 to 12 carbon stoms. The halogen atoms are chlorine, bromine, iodine and fluorine.

Examples of these compounds are shown in the following, in which Me: methyl; Et: ethyl; Pr: propyl; Bu: butyl; He: hexyl; Oct: octyl; Ph: phenyl; and cyHe: cyclohexyl.

$MgMe_2$, $MgEt_2$, Mgi-$Pr_2$, $MgBu_2$, $MgHe_2$, $MgOct_2$, MgEtBu, $MgPh_2$, $MgcyHe_2$, $Mg(OMe)_2$, $Mg(OEt)_2$, $Mg(OBu)_2$, $Mg(OHe)_2$, $Mg(OOct)_2$, $Mg(OPh)_2$, $Mg(OcyHe)_2$, EtMgCl, BuMgCl, HeMgCl, i-BuMgCl, t-BuMgCl, PhMgCl, $PhCH_2MgCl$, EtMgBr, BuMgBr, PhMgBr, BuMgl, EtOMgCl, BuOMgCl, HeOMgCl, PhOMgCl, EtOMgBr, BuOMgBr, EtOMgl, $MgCl_2$, $MgBr_7$ and $Mgl_2$.

The above described magnesium compounds can also be prepared from metallic magnesium or other magnesium compounds when Component A is prepared. For example, there is a method comprising contacting metallic magnesium, a halogenated hydrocarbon and an alkoxy group-containing compound represented by the general formula $X_n M(OR)_{m-n}$ in which X is a hydrogen atom, a halogen atom or a hydrocarbon group of 1 to 20 carbon atoms, M is boron, carbon, aluminum, silicon or phosphorus, R is a hydrocarbon group of 1 to 20 carbon atoms, m is the atomic valence of M and $m > n \geqq O$. The hydrocarbon group of X or R in the general formula of the alkoxy group-containing compound includes alkyl groups such as methyl (Me), ethyl (Et), propyl (Pr), i-propyl (i-Pr), butyl (Bu), i-butyl (i Bu), hexyl (He), octyl (Oct) groups and the like; cycloalkyl groups such as cyclohexyl (cyHe), methylcyclohexyl groups and the like;alkenyl groups such as allyl, propenyl, butenyl groups and the like; aryl groups such as phenyl, tolyl, xylyl, groups and the like; and aralkyl groups such as phenethyl, 3-phenylpropyl groupsand the like. Abov all, an alkyl groups containing 1 to 10 carbon atoms is preferably used. The alkoxy group-containing compound is exemplified as follows:

① Compound when M is carbon

$C(OR)_4$ such as $C(OMe)_4$, $C(OEt)_4$, $C(OPr)_4$, $C(OBu)_4$, $C(Oi\text{-}Bu)_4$, $C(OHe)_4$, and $C(OOct)_4$: $XC(OR)_3$ such as $HC(OMe)_3$, $HC(OEt)_3$, $HC(OPr)_3$, $HC(OBu)_3$, $HC(OKe)_3$, $HC(OPh)_3$, $MeC(OMe)_3$, $MeC(OEt)_3$, EtC-$(OMe)_3$, $EtC(OEt)_3$, $cyHeC(OEt)_3$, $PhC(OMe)_3$, $PhC(OEt)_3$, $CH_2ClC(OEt)_3$, $MeCHBrC(OEt)_3$, MeCHClC-$(OEt)_3$, $ClC(OMe)_3$, $ClC(OEt)_3$, $ClC(Oi\text{-}Bu)_3$, and $BrC(OEt)_3$; $X_2C(OR)_2$ such as $MeCH(OMe)_2$, MeCH-$(OEt)_2$, $CH_2(OMe)_2$, $CH_2(OEt)_2$, $CH_2ClCH(OEt)_2$, $CHCl_2CH(OEt)_2$ $CCl_3CH(OEt)_2$, $CH_2BrCH(OEt)_2$ and $PhCH(OEt)_2$.

② Compound when M is silicon

$Si(OR)_4$ such as $Si(OMe)_4$, $Si(OEt)_4$, $Si(OBu)_4$, $Si(Oi\text{-}Bu)_4$, $Si(OHe)_4$, $Si(OOct)_4$ and $Si(OPh)_4$; XSi-$(OR)_3$ such as $HSi(OEt)_3$, $HSi(OBu)_3$, $KSi(OHe)_3$ $HSi(OPh)_3$, $MeSi(OMe)_3$, $MeSi(OEt)_3$, $MeSi(OBu)_3$, EtSi-$(OEt)_3$, $PhSi(OEt)_3$, $EtSi(OPh)_3$, $ClSi(OMe)_3$, $ClSi(OEt)_3$, $ClSi(OBu)_3$, $ClSi(OPh)_3$, and $BrSi(OEt)_3$; $X_2$Si-$(OR)_2$ such as $Me_2Si(OMe)_2$, $Me_2Si(OEt)_2$, $Et_2Si(OEt)_2$,$MeClSi(OEt)_2$, $CHCl_2SiH(OEt)_2$, $CCl_3SiH(OEt)_2$ and $MeBrSi(OEt)_2$; $X_3SiOR$ such as $Me_3SiOMe$, $Me_3SiOEt$, $Me_3SiOBu$, $Me_3SiOPh$, $Et_3SiOEt$ and $Ph_3SiOEt$.

③ Compound when M is boron

$B(OR)_3$ such as $B(OEt)_3$, $B(OBu)_3$, $B(OHe)_3$ and $B(OPh)_3$,

④ Compound when M is aluminum

$Al(OR)_3$ such as $Al(OMe)_3$, $Al(OEt)_3$, $Al(OPr)_3$, $Al(Oi\text{-}Pr)_3$, $Al(OBu)_3$, $Al(Ot\text{-}Bu)_3$, $Al(OHe)_3$ and $Al(OPh)_3$.

⑤ Compound when M is phosphorus

$P(OR)_3$ such as $P(OMe)_3$, $P(OEt)_3$, $P(OBu)_3$, $P(OHe)_3$ and $P(OPh)_3$.

As the above described magnesium compound, there can be used complexes with organic compounds of Group II or IIIa metals (M) of Periodic Table, which are represented by the general formula $MgR^1R^2 \cdot n(MR^3{}_m)$ wherein M is aluminum, zinc, calcium, etc., $R^3$ is an alkyl group, cycloalkyl group, aryl group or aralkyl group containing 1 to 12 carbon atoms, m is the atomic valence of M and n is a numeral of 0.1 to 10. Examples of the compound represented by $MR^3{}_m$ are $AlMe_3$, $AlEt_3$, $Ali\text{-}Bu_3$, $AlPh_3$, $ZnMe_2$, $ZnEt_2$, $ZnBu_2$, $ZnPh_2$, $CaEt_2$, $CaPh_2$ and the like.

(3) Titanium Compound

The titanium compound includes compounds of di-, tri- and tetravalent titanium, illustrative of which are titanium tetrachloride, titanium tetrabromide, trichoroethoxytitanium, trichlorobutoxytitanium, dichlorodiethoxytitanium, dichlorodibutoxytitanium, dichlorodiphenoxytitanium, chlorotriethoxytitanium, chlorotributoxytitanium, tetrabutoxytitanium, titanium trichloride and the like. Above all, halides of tetravalent titanium such as titanium tetrachloride, trichloroethoxytitanium, dichlorodibutoxytitanium, dichlorodiphenoxytitanium, etc. are preferable and in particular, titanium tetrachloride is most preferable.

(4) Electron-donating Compounds

As the electron donating compond, there are given carboxylic acids, carboxylic acid anhydride, carboxylic acid esters, carboxylic acid halides, alcohols, ethers, ketones, amines, amides, nitriles, aldehydes, alcolates, phosphorus, arsenic and antimony compounds bonded with organic groups through carbon or oxygen, phosphonamides, thioethers, thioesters, carbonic acid esters and the like. Above all, it is preferable to use the carboxylic acids, carboxylic acid anhydrides, carboxylic acid esters, carboxylic acid halides, alcohols, ethers, etc.

Examples of the carboxylic acid are aliphatic monocarboxylic acids such as formic acid, acetic acid, propionic acid, butyric acid, isobutyric acid, valeric acid, caproic acid, pivalic acid, acrylic acid, methacrylic acid, crotonic acid and the like; aliphatic dicarboxylic acids such as malonic acid, succinic acid, glutaric acid, adipic acid, sebacic acid, maleic acid, fumaric acid and the like; aliphatic oxycarboxylic acids such as tartaric acid; alicyclic carboxylic acids such as cyclohexanemonocarboxylic acid, cyclohexenemonocarboxyl ic acid, cis-1,2-cyclohexanedicarboxylic acid, cis-4-methylcyclohexene-1,2-dicarboxylic acid and the like;aromatic monocarboxylic acids such as benzoic acid, toluic acid, anisic acid, p-t-butylbenzoic acid, naphthoic acid, cinnamic acid and the like; and aromatic polybasic carboxylic acids such as phthalic acid, isophthalic acid, terephthalic acid, naphthalic acid, trimellitic acid, hemimellitic acid, trimesic acid, pyromellitic acid, mellitic acid and the like.

As the carboxylic acid anhydride, there can be used the anhydrides of the above described carboxylic acids.

As the carboxylic acid ester, there can be used mono- or polyvalent esters of the above described carboxylic acids, illustrative of which are butyl formate, ethyl acetate, butyl acetate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisoutyl adipate, dibutyl sebacate, diisobutyl sebacate, diethyl maleate, dibutyl maleate, diisobutyl maleate, monomethyl fumarate, diethyl fumarate, diisobutyl fumarate, diethyl tartarate, dibutyl tartarate, diisobutyl tartarate, ethyl cyclohexanecarboxylate, methyl benzoate, ethyl benzoate, methyl p-toluiate, ethyl p-tert-butylbenzoate, ethyl p-anisate, ethyl α-naphthoate, isobutyl α-naphthoate, ethyl cinnamate, monomethyl phthalate, mono-butyl phthalate, dibutyl phthalate, diisobutyl phthalate, dihexyl phthalate, dioctyl phthalate, di-2-ethylhexyl phthalate, diallyl phthalate, diphenyl phthalate, diethyl isophthalate, diisobutyl isophthalate, diethyl terephthalate, dibutyl terephthalate, diethyl naphthalate, dibutyl naphthalate, triethyl trimellitate, tributyl trimellitate, tetramethyl pyromellitate, tetraethyl pyromellitate, tetrabutyl pyromellitate and the like.

As the carboxylic acid halides, there can be used halides of the above described carboxylic acids, illustrative of which are acetyl chloride, acetyl bromide, acetyl iodide, propionyl chloride, butyryl chloride, butyryl bromide, butyryl iodide, pivalyl chloride, pivalyl bromide, acrylyl chloride, acrylyl bromide, acrylyl iodide, methacryloyl chloride, methacryloyl bromide, methacryloyl iodide, crotonyl chloride, malonyl chloride, malonyl bromide, succinyl chloride, succinyl bromide, glutaryl chloride, glutaryl bromide, adipyl

chloride, adipyl bromide, sebacoyl chloride, sebacoyl bromide, maleoyl chloride, maleoyl bromide, fumaryl chloride, fumaryl bromide, tartaryl chloride, tartaryl bromide, cyclohexancarboxylic chloride, cyclohexanecarboxylic bromide, 1-cyclohexenecarboxylic chloride, cis-4-methylcyclohexenecarboxylic chloride, cis-4-methylcyclohenecarboxylic bromide, benzoyl chloride, benzoyl bromide, p-toluoyl chloride, p-toluoyl bromide, p-anisoyl chloride, p-anisoyl bromide, α-naphthoyl chloride, cinnamoyl chloride, cinnamoyl bromide, phthaloyl dichloride, phthaloyl dibromide, isophthaloyl dichloride, isophthaloyl dibromide, terephthaloyl dichloride, naphthaloyl dichloride and the like. Monoalkylhalides of dicarboxylic acids can also be used such as adipyl monomethylchloride, maleoyl monoethylchloride, ride, maleoyl monomethylchloride and phthaloyl butylchloride can also be used.

Alcohols are represented by the general formula ROH wherein R is an alkyl, alkenyl, cycloalkyl, aryl or aralkyl group containing 1 to 12 carbon atoms. Examples of the alcohol are methanol, ethanol, propanol, isopropanol, butanol, isobutanol, pentanol, hexanol, octanol, 2-ethylhexanol, cyclohexanol, benzyl alcohol, allyl alcohol, phenol, cresol, xylenol, ethylphenol, isopropylphenol, p-tert-butylphenol, n-octylphenol and the like.

Ethers are represented by the general formula $ROR^1$ wherein R and $R^1$ are alkyl, alkenyl, cycloalkyl, aryl and aralkyl groups containing 1 to 12 carbon atoms, R and $R^1$ being same or different. Examples of the ethers are diethyl ether, diisopropyl ether, dibutyl ether, diisobutyl ether, diisoamyl ether, di-2-ethylhexyl ether, diallyl ether, ethyl allyl ether, butyl allyl ether, diphenyl ether, anisole, ethyl phenyl ether and the like.

Preparation of Component A is carried out by methods comprising ① contacting a metal oxide (Component 1), a magnesium compound (Component 2), titanium compound (Component 3) and electron-donating compound (Component 4) in this order, ② contacting Components 1 and 2 and then contacting with Component 4 and Component 3 in this order, ③ contacting Components 1 and 2 and then contacting with Component 3 and Component 4 simultaneously, ④ contacting Components 2 and 3 and then contacting with Component 4 and Component 1 in this order, ⑤ contacting Components 2 and 4 and then contacting with Component 3 and Component 1 in this order, and ⑥ contacting Components 2, 3 and 4 simultaneously and then contacting with Component 1. Before contacting with Component 3, a halogen-containing compound can be contacted.

As the halogen-containing compound, there can be used halogenated hydrocarbons, halogen-containing alcohols, halogenated silicon compounds having hydrogen-silicon bonds and halides of Group IIa, IVa and Va elements of Periodic Table (which will hereinafter be referred to as metal halides).

As the halogenated hydrocarbon, there can be used mono- and poly-halogen-substitued products of saturated or unsaturated aliphatic, alicyclic and aromatic hydrocarbons containing 1 to 12 carbon atoms. Examples of these compounds are aliphatic compounds such as methyl chloride, methyl bromide, methyl iodide, methylene chloride, methylene bromide, methylene iodide, choroform, bromoform, iodoform, carbon tetrachloride, carbon tetrabromide, carbon tetraiodide, ethyl chloride, ethyl bromide, ethyl iodide, 1,2-dichloroethane, 1,2-dibromoethane, 1, 2-diiodoethane, methylchloroform, methylbromoform, methyliodoform, 1,1,2-trichloroethylene, 1,1,2-tribromoethylene, 1,1,2,2-tetrachloroethylene, pentachloroethane, hexachloroethane, hexabromoethane, n-propyl chloride, 1,2-dichloropropane, hexachloropropylene, octachloropropane, decabromobutane and chlorinnated paraffins; alicyclic compounds such as chlorocyclopropane, tetrachlorocyclopentane, hexachlorocyclopentadiene and hexachlorocyclohexane; and aromatic compounds such as chlorobenzene, bromobenzene, o-dichlorobenene, p-dichlorobenne, hexachlorobenzne, hexabromobenzene, benzotrichloride, p-chlorobenzotrichloride and the like. These compounds can be used individually or in combination.

The halogen-containing alcohol used in the present invention means such a compound that in a mono- or polyhydric alcohol having one or more hydroxyl groups in one molecule, any one or more hydrogen atoms other than the hydroxyl groups are substituted by halogen atoms. As the halogen atom, there are chlorine, bromine, iodine and fluorine atoms, but chlorine atom is preferable.

Examples of these compounds are 2-chloroethanol, 1-chloro-2-propanol, 3-chloro-1-propanol, 1-chloro-2-methyl-2-propanol, 4-chloro-1-butanol, 5-chloro-1-pentanol, 6-chloro-1-hexanol, 3-chloro-1,2-propane diol, 2-chlorocyclohexanol, 4-chlorobenzhydrol, (m, o, p)-chlorobenzyl alcohol, 4-chlorocatechol, 4-chloro-(m, o)-cresol, 6-chloro-(m, o)-cresol, 4-chloro-3,5-dimethylphenol, chlorohydroquinone, 2-benzyl-4-chlorophenol, 4-chloro-1-naphthol, (m, o, p )-chlorophenol, p-chloro- α-methyl benzyl alcohol, 2-chloro-4-phenylphenol, 6-chlorothymol, 4-chlororesorcin, 2-bromoethanol, 3-bromo-1-propanol, 1-bromo-2-propanol, 1-bromo-2-butanol, 2-bromo-p-cresol, 1-bromo-2-napthol, 6-bromo-2-naphthol, (m, o, p)--bromophenol, 4-bromoresorcin, (m, o, p)-chlorophenol, p-iodophenol, 2,2-dichloroethanol, 2,3-dichloro-1-propanol, 1,3-dichloro-2-propanol, 3-chloro-1-( α-chloromethyl)-1-propanol, 2,3-dibromo-1-propanol, 1,3-di-bromo-2-propanol, 2,4-dibromophenol, 2,4-dibromo-1-naphthol, 2,2,2-tri- chloroethanol, 1,1,1-trichloro-2-propanol, β, β, β-trichloro-tert-butanol, 2,3,4-trichlorophenol, 2,4,5-trichlorophenol, 2,4,6-trichlorophenol, 2, 4,6-tribromophenol, 2,3,5-tribromo-2-hydroxytoluene, 2,3,5-tribromo-4-hydroxytoluene, 2,2,2-trifluoroethanol, α, α, α-trifluoro-m-cresol, 2,4,6-triiodophenol, 2,3,4,6-tetrachlorophenol, tetrachlorohydroquinone, tetrachlorobisphenol A, tetrabromobisphenol A, 2,2,3,3-tetrafluoro-1-propanol, 2,3,5,6-tetrafluorophenol, tetrafluororesorcin and the like.

As the halogenated silicon compound having hydrogen-silicon bonds, there can be used $HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl$,$H_2(n\text{-}C_4H_9)SiCl$, $H_2(C_6H_4CH_3)SiCl$, $HSiCl(C_6H_5)_2$ and the like.

As the metal halide, there can be used chlorides, fluorides, bromides and iodides of B, Al, Ga, In, Tl, Si, Ge, Sn, Pb, As, Sb and Bi. In particular, $BCl_3$, $BBr_3$, $BI_3$, $AlCl_3$, $AlBr_3$, $GaCl_3$, $GaBr_3$, $InCl_3$, $TlCl_3$, $SiCl_4$, $SnCl_4$, $SbCl_5$, $SbF_5$ and the like are preferable.

Contacting of Components 1, 2, 3 and 4 optionally with a halogen-containing compound to be contacted is carried out by mixing and stirring or mechanically co-pulverizing in the presence or absence of an inert medium while healing at 40 to 150 °C. As the inert medium, there can be used saturated aliphatic hydrocarbons such as hexane, heptane, octane, etc., saturated alicyclic hydrocarbons such as cyclopentane, cyclohexane, etc. and aromatic hydrocarbons such as benzene, toluene, xylene, etc.

Preparation of Component A in the present first invention is preferably carried out by methods disclosed in Japanese Patent Laid-Open Publication Nos. 162607/1983, 94909/1980, 115405/1980, 108107/1982, 21109/1986, 174204/1986, 174205/1986, 174206/1986 and 7706/1987.

These methods will now be illustrated in detail:

① Method comprising contacting a reaction product of a metal oxide and a magnesium dialkoxide with an electron-donating compound and a tetravalent titanium halide (Japanese Patent Laid-Open Publiacation No. 162607/1983).

② Method comprising contacting a reaction product of an inorganic oxide and a magnesium hydrocarbylhalide with a Lewis base compound and titanium tertachloride (Japanese Patent Laid-Open Publiacation No. 94909/1980).

③ Method comprising contacting a reaction product of a porous support such as silica and an alkylmagnesium compound with an electron-donating compound and a silicon halide compound and then with a titanium compound (Japanese Patent Laid-Open Publication Nos. 115405/1980 and 108107/1982).

④ Method comprising contacting a metal oxide, an alkoxy group-containing magnesium compound, an aromatic polybasic carboxylic acid having carboxyl group at the ortho position or its derivative and a titanium compound (Japanese Patent Laid-Open Publication No. 174204/19869).

⑤ Method comprising contacting a metal oxide, an alkoxy group-containing magnesium compound, a silicon compound having hydrogen-silicon bonds, an electron-donating compound and a titanium compound (Japanese Patent Laid-Open Public ation No. 174205/1986).

⑥ Method comprising contacting a metal oxide, an alkoxy group-containing magnesium compound, a halogen atom or halogen-containing compound, an electron-donating compound and a titanium compound (Japanese Patent Laid-Open Publication No. 174206/1986).

⑦ Method comprising contacting a reaction product of a metal oxide, dihydrocarbylmagnesium and a halogen-containing alcohol with an electron-donating compound and a titanium compound (Japanese Patent Laid-Open Publication No. 21109/1986).

⑧ Method comprising contacting a solid obtained by contacting a metal oxide, a hydrocarbylmagnesium and a hydrocarbyloxy group-containing compound (corresponding to the above described alkoxy group-containing compound) with a halogen-containing alcohol and further with an electron-containing compound and a titanium compound (Japanese Patent Laid-Open Publication No. 7706/1987).

Above all, the methods ④ to ⑧, in particular, methods ⑦ and ⑧ are preferable.

Component A is thus prepared, but if necessary, Component A can be washed with an inert medium as described above and further dried.

Component A can further be contacted with an olefin in the presence of an organoaluminum compound to incorporate the resulting olefin polymer in Component A. The organoaluminum compound is selected from the following aluminum compounds as one component of the catalyst used in the present invention.

As the olefin, there are used, in addtion to ethylene, α-olefins such as propylene, 1-butene, 1-hexene, 4-methyl-1-pentene and the like. Contacting with the olefin is preferably carried out in the presence of the foregoing inert medium, in general, at a temperature of at most 100 °C, preferably -10 °C to +50 °C. The quantity of the olefin polymer contained in Component A is ordinarily 0.1 to 100 g per 1 g of Component A.

Contacting of Component A with an olefin can be carried out in the presence of an electron-donating compound in addition to an organoaluminum compound. The electron-donating compound is generally selected from the compounds used in the preparation of Component A. Component A contacted with the olefin can if necessary be washed with the foregoing inert medium and further dried.

Organometal Compound

The organometal compound (hereinafter referred to as Component B) is an organic compound of Groups I to III metals of Periodic Table.

As Component B, there can be used organo compounds of lithium, magnesium, calcium, zinc and aluminum. Above all, organoaluminum compounds are preferably used.

As the organoaluminum compound, there are used those represented by the general formula $R_n AlX_{3-n}$ wherein R is an alkyl or aryl group, X is a halogen atom, alkoxy group or hydrogen atom and n is any numeral in the range of $1 \leqq n \leqq 3$, for example, alkylaluminum compounds containing 1 to 18 carbon atoms, preferably 2 to 6 carbon atoms, such as trialkylaluminum, dialkylaluminum monohalide, monoalkylaluminum dihalide, alkylaluminum sesquihalide, dialkylaluminum monoalkoxide and dialkylaluminum monohydride, mixtures or complex compounds thereof. Specifically, there are trialkylaluminums such as trimethylaluminum, triethylaluminum, tripropylaluminum, triisobutylaluminum, trihexylaluminum, etc., dialkylaluminum monohalides such as dimethylaluminum chloride, diethylaluminum chloride, diethylaluminum bromide, diethylaluminum iodide, diisobutylaluminum chloride, etc., monoalkylaluminum dihalides such as methylaluminum dichloride, ethylaluminum dichloride, methylaluminum dibromide, ethylaluminum dibromie, ethylaluminum diiodide, isobutylaluminum dichloride, etc., alkylaluminum sesquihalides such as ethylaluminum sesquichloride, etc., dialkylaluminum monoalkoxides such as dimethylaluminum methoxide, diethylaluminum ethoxide, diethylaluminum phenoxide, dipropylaluminum ethoxide, diisbutylaluminum ethoxide, diisobutylaluminum phenoxide, etc. and dialkylaluminum hydrides such as dimethylaluminum hydride, diethylaluminum hydride, dipropylaluminum hydride, diisobutylaluminum hydride, etc. Above all, trialkylaluminums, particularly, triethylaluminum and triisobutylaluminum are preferable. These trialkylaluminums can be used jointly with other organoaluminum compounds, for example, commercially available diethylaluminum chloride, ethylaluminum dichloride, ethylaluminum sesquichloride, diethylaluminum ethoxide, diethylaluminum hydride or mixtures or complex compounds thereof.

Furthermore, such an organoaluminum compound that two or more aluminums are bonded via oxygen atom or nitrogen atom can be used, illustrative of which are $(C_2H_5)_2AlOAl(C_2H_5)_2$. $(C_4H_9)_2AlOAl(C_4H_9)_2$ and

$$\begin{array}{c}(C_2H_5)_2AlNAl(C_2H_5)_2\\ |\\ C_2H_5\end{array}$$

As organic compounds of other metals than aluminum metal, there are diethylmagnesium, ethylmagnesium chloride, diethylzinc and compounds such as $LiAl(C_2H_5)_4$, $LiAl(C_7H_{15})_4$, etc.

Ethoxy Group-containing Silane Compound

The ethoxy group-containing silane compound (which will hereinafter be referred to as Component C) used in the present invention is represented by the general formula $R_n Si(OC_2H_5)_{4-n}$ and has a molecular volume of 200 to 500 $Å^3$ and an electron density of oxygen atoms in the ethoxy group of 0.680 to 0.800 A.U. (atomic unit), calculated by the quantum chemistry.

The quantum chemistry calculation is effected as follows:

The molecular volume is obtained by the MNDO method [a kind of semiempirical molecular orbital method, J.Am.Chem.Soc.99, page 4899, page 4907 (1977), ibid 100, page 3607 (1978)] of MOPAC as a program of the molecular orbital method [bought from QCPE (Quantum Chemistry Program Organization) as a non-profit-making organization for spreading various programs for chemistry in the Indiana University, USA] and the Van der Waals Radius [J.Phys.Chem. 68, page 441-451 (1964) ]. The electron density of oxygen atoms in the ethoxy group is calculated by the MNDO method of MOPAC as described above. For this calculation, VAX 11/785 manufactured by DEC (Degital Equipment Corporation) was used.

R in the foregoing general formula for Component C is an aliphatic hydrocarbon group having 3 to 10 carbon atoms, that is, an alkyl group and an alkenyl group, preferably alkyl group.

Component C has a molecular volume of 200 to 500 $Å^3$ and an electron density of oxygen atoms in the ethoxy group of 0.680 to 0.800 A.U., calculated by the above described calculation method, preferably a volume of 240 to 350 $Å^3$ and an electron density of 0.684 to 0.700 A.U.

Examples of Component C satisfying the foregoing volume and electron density are given below by chemial formulas:

In the formula, Me:$CK_3$; Et: $C_2H_5$; Pr: $C_3H_7$; Bu:$C_4H_9$; Pe:$C_5H_{11}$; and He: $C_6H_{13}$.

$(n\text{-}Bu)_2Si(OEt)_2$, $(t\text{-}Bu)_2Si(OEt)_2$, $(s\text{-}Bu)_2Si(OEt)_2$, $(t\text{-}Bu)_2Si(OEt)_2$, $[(n\text{-}Pr)(Me)CH]_2Si(OEt)_2$, $(t\text{-}Pe)_2Si(OEt)_2$, $[(t\text{-}Bu)CH_2]_2Si(OEt)_2$, $[(Et)(Me)CH \cdot CH_2]_2Si(OEt)_2$, $(n\text{-}He)_2Si(OEt)_2$, $[(Et)(Me)_2C \cdot CH_2]_2Si(OEt)_2$, $[(t\text{-}Bu)CH_2CH_2]_2Si(OEt)_2$, $(n\text{-}Pr)Si(OEt)_3$, $(n\text{-}Bu)Si(OEt)_3$, $(t\text{-}Bu)Si(OEt)_3$, $(n\text{-}Pe)Si(OEt)_3$, $(t\text{-}Pe)Si(OEt)_3$, $[(n\text{-}Pr)(Me)CH]Si(OEt)_3$, $[(t\text{-}Bu)CH_2]Si(OEt)_3$, $[(Et)(Me)CH\ CH_2]Si(OEt)_3$, $(n\text{-}He)Si(OEt)_3$, $[(Et)(Me)_2C \cdot CH_2]Si(OEt)_3$, $[(t\text{-}Bu)CH_2CH_2]Si(OEt)_3$, etc.

The catalyst used in the present invention is generally composed of Components A, B and C in such a manner that Component B is present in a proportion of 1 to 2000 gram moles, preferably 20 to 500 gram moles to 1 gram atom of the titanium in Component A and Component C is present in a proportion of 0.001 to 10 moles, preferably 0.01 to 1.0 mole to 1 mole of Component B.

Polymerization of α-Olefins

The present invention is concerned with the production of poly α-olefins by polymerizing α-olefins using the above described catalyst. The α-olefins include those containing 3 to 10 carbon atoms, illustrative of which are propylene, 1-butene, 1-hexene, 4-methyl-1-pentene, etc. The polymerization includes not only the homopolymerization of α-olefins but also the random copolymerization of α-olefins with ethylene or with other α-olefins.

The polymerization reaction is carried out either in gaseous or liquid phase. In the case of the liquid phase, the polymerization is carried out in an inert hydrocarbon such as n-butane, i-butane, n-pentane, i-pentane, hexane, heptane, octane, cyclohexane, benzene, toluene, or xylene or in a liquid monomer. The polymerization temperature is generally -80 to +150 °C, preferably 40 to 120 °C and the polymerization pressure can be, for example, 1 to 60 atm.

In the copolymerization, the amount of other polyolefins to be copolymerized with the α- olefin is generally at most 30 % by weight, in particular, 0.3 to 15 % by weight to the α-olefin. The polymerization reaction can be carried out continuously or batchwise under the commonly used conditions. The copolymerization reaction can be carried out either in one or more stages.

The present invention is particularly useful for the production of poly-α-olefins with a melt flow rate (MFR) of at least 50 g/10 min, whose MFR can be controlled by the known molecular weight regulators, in particular, hydrogen.

Examples

The present invention will be illustrated specifically by the following examples and comparative examples, in whcih percents (%) are to be taken as those by weight unless otherwise indicated.

The heptane-insoluble content (hereinafter referred to as HI) showing the proportion of a crystalline polymer in the polymer is a residual amount obtained by extracting the product with boiled n-heptane by means of a Soxhlet extractor of improved type for 6 hours.

Measurement of MFR is carried out according to ASTM-D 1238.

Example 1

Preparation of Component A

A flask of 200 ml equipped with a dropping funnel and a stirrer was replaced by nitrogen, in which 5 g of silicon oxide (manufacture by DAVISON Co., commercial name G-952) calcined for 2 hours in a nitrogen stresm at 200 °C and for further 5 hours at 700 °C and 40 ml of n-heptane were charged. Further, 20 ml of a 20 % n-heptane solution of n-butylethylmagnesium (hereinafter referred to as BEM) (manufactured by Texas Alkyls Co., commercial name MAGALA BEM) was added thereto and stirred for 1 hour at 90 °C.

After the above described suspension was cooled to 0 °C, a solution of 11.2 g of tetraethoxysilane dissolved in 20 ml of n-heptane was dropwise added thereto for 30 minutes from the dropping funnel. After the dropwise addition, the mixture was heated to 50 °C for 2 hours and stirred for 1 hour at 50 °C. After the reaction, the supernatant liquid was removed by decantation and the resulting solid was washed with 60 ml of n-heptane at room temperature, followed by decantation to remove the supernatant liquid. This washing treatment with n-heptane was carried out 4 times.

50 ml of n-heptane was added to the above described solid to form a suspension, to which a solution of 8.0 g of 2,2,2-trichloroethanol dissolved in 10 ml of n-heptane was dropwise added for 15 minutes at 25 °C from the dropping funnel. After the dropwise addition, the mixture was further stirred at 25 °C for 30 minutes and after the reaction, the reaction product was washed at room temperature with 60 ml of n-heptane 2 times and with 60 ml of toluene 3 times respectively. Analysis of the resulting solid (Solid Component I) showed that it contained 36.6 % of $SiO_2$, 5.1 % of magnesium and 38.5 % of chlorine.

To the thus obtained Solid Component I were added 10 ml of n-heptane and 40 ml of titanium tetrachloride and the temperature being raised to 90 °C, a solution of 0.6 g of di-n-butyl phthalate dissolved in 5 ml of n-heptane for 5 minutes. Then, the temperature was raised to 115 °C and the reaction was carried out for 2 hours. The reaction mixture was cooled to 90 °C, subjected to decantation to remove the supernatant liquid and washed with 70 ml of n-heptane 2 times. Furthermore, 15 ml of n-heptane and 40 ml of titanium tetrachloride were added thereto and reacted at 115 °C for 2 hours. After the reaction, the resulting solid material was washed with 60 ml of n-hexane at room temperature 8 times and dried under reduced pressure at room temperature for 1 hour to obtain 8.3 g of a catalytic component (Component A) containing 3.1 % of titanium and further, silicon oxide, chlorine and di-n-butyl phthalate.

Polymerization of Propylene

10.1 mg of Component A obtained as described above, 4 ml of a solution containing 0.8 mole of triethylaluminum (hereinafter referred to as TEAL) in 1000 ml of n-heptane and 1 ml of a solution containing 0.08 mole of n-butyltriethoxysilane in 1000 ml of n-heptane were mixed and maintained for 5 minutes in a nitrogen atmosphere and then charged in an stainless steel autoclave of 1500 ml, equipped with a stirrer. Then, 2.5 1 of hydrogen gas as a molecular weight regulator and 1000 ml of liquid propylene were added under pressure and thereafter, the reaction system was heated to 70 °C to effect polymerization of propylene for 1 hour. After the polymerization, the unreacted propylene was purged to obtain a white powder of polypropylene with an HI of 96.3 %. The polymerization activity ($R_c$) of the catalyst was 12.5 kg/g • Component A • hr and MFR of the polymer was 175 g/10 min.

Furthermore, the volume of the n-butyltriethoxysilane and the electron density of oxygen in the ethoxy group were calculated as described above to obtain results as shown in Table 1.

In addition, polymerization of propylene was further carried out in an analogous manner to the described above except changing the amount of hydrogen to be used as shown in Table 1, thus obtaining results shown in Table 1.

Examples 2 to 10

Polymerization of propylene was carried out in an analcgous manner to Example 1 except using silane compounds shown in Table 1 instead of the n-butyltriethoxysilane and using the amounts of hydrogen shown in Table 1 to obtain results shown in Table 1.

In Table 1 are shown calculated values as to the volume and the electron density of oxygen atoms of these compounds.

Comparative Examples 1 to 6

Polymerization of propylene was carried out in an analogous manner to Example 1 except using compounds shown in Table 2 as a silane compound and using the amounts of hydrogen shown in Table 2 to obtain results shown in Table 2.

In Table 2 are shown calculated values as to the volume and the electron density of oxygen atoms of these compounds.

Reference Examples 1 to 3

Polymerization of propylene was carried out in an analogous manner to Example 1 except using aromatic group-containing compounds shown in Table 2 as a silane compound and using the amount of hydrogen shown in Table 2 to obtain results shown in Table 2.

Table 1

| Example | Silane Compound | Volume ($Å^3$) | Electron Density (A.U.) | Amount of Hydrogen (l) | $R_c$ (kg/g · Component A · hr) | HI (%) | MFR (g/10 min) |
|---|---|---|---|---|---|---|---|
| 1 | n-BuSi$(OEt)_3$ | 230.4 | 0.6846 | 0.9 | 10.0 | 96.5 | 55.0 |
| | | | | 1.5 | 11.2 | 96.1 | 88.0 |
| | | | | 2.0 | 12.0 | 96.4 | 123 |
| | | | | 2.5 | 13.0 | 96.3 | 175 |
| 2 | t-BuSi$(OEt)_3$ | 230.6 | 0.6901 | 2.5 | 11.5 | 96.8 | 135 |
| 3 | n-PeSi$(OEt)_3$ | 247.7 | 0.6860 | 1.0 | 11.8 | 97.4 | 56.2 |
| | | | | 1.5 | 12.8 | 96.8 | 89.9 |
| | | | | 2.5 | 14.2 | 97.1 | 181 |
| 4 | (Pr)(Me)CH Si$(OEt)_3$ | 248.0 | 0.6898 | 2.5 | 15.1 | 97.8 | 157 |
| 5 | t-PeSi$(OEt)_3$ | 247.6 | 0.6940 | 2.5 | 12.9 | 97.8 | 104 |
| 6 | n-HeSi$(OEt)_3$ | 264.8 | 0.6871 | 2.5 | 14.9 | 97.1 | 204 |
| 7 | $(s\text{-}Bu)_2$ Si$(OEt)_2$ | 256.8 | 0.6870 | 2.5 | 15.8 | 97.7 | 139 |
| 8 | $[(n\text{-}Pr)(Me)CH]_2Si(OEt)_2$ | 290.7 | 0.6890 | 2.5 | 18.3 | 97.5 | 132 |
| 9 | $[(Et)(Me)_2C \cdot CH_2]_2Si(OEt)_2$ | 324.6 | 0.6893 | 2.5 | 17.5 | 98.1 | 108 |
| 10 | $(n\text{-}He)_2(OEt)_2$ | 324.2 | 0.6810 | 0.9 | 15.0 | 96.7 | 52.0 |
| | | | | 1.5 | 17.2 | 96.4 | 101 |
| | | | | 2.5 | 19.6 | 96.5 | 195 |
| | | | | 3.0 | 19.9 | 96.7 | 255 |

Table 2

| Example | Silane Compound | Volume ($Å^3$) | Electron Density (A.U.) | Amount of Hydrogen (l) | $R_c$ (kg/g · Component A · hr) | HI (%) | MFR (g/10 min) |
|---|---|---|---|---|---|---|---|
| comparison | | | | | | | |
| 1 | $Si(OEt)_4$ | 204.6 | 0.6762 | 0.5 | 8.1 | 91.2 | 45.0 |
| | | | | 1.5 | 11.5 | 91.4 | 180 |
| | | | | 2.5 | 12.3 | 91.3 | 364 |
| 2 | $MeSi(OEt)_3$ | 179.3 | 0.6845 | 2.5 | 8.0 | 92.0 | 221 |
| 3 | $EtSi(OEt)_3$ | 196.5 | 0.6858 | 2.5 | 11.6 | 95.2 | 120 |
| 4 | $(Me)_2Si(OEt)_2$ | 154.1 | 0.6658 | 0.5 | 4.3 | 82.4 | 50.1 |
| | | | | 2.5 | 7.6 | 80.9 | 383 |
| 5 | $(n\text{-}Pe)_2Si(OEt)_2$ | 290.3 | 0.6765 | 1.0 | 13.5 | 95.0 | 58.3 |
| | | | | 2.5 | 16.9 | 95.1 | 263 |
| 6 | $(t\text{-}Bu)(Me)Si(OEt)_2$ | 205.1 | 0.6799 | 2.5 | 12.6 | 94.0 | 174 |
| reference | | | | | | | |
| 1 | $C_6H_5Si(OEt)_3$ | - | - | 2.5 | 13.2 | 96.1 | 145 |
| 2 | $(C_6H_5)(Me)Si(OEt)_2$ | - | - | 2.5 | 11.2 | 91.8 | 174 |
| 3 | $(C_6H_5)(Me)Si(OMe)_2$ | - | - | 2.5 | 15.1 | 96.1 | 56.1 |
| | | | | 3.0 | 13.1 | 94.9 | 94.5 |
| | | | | 5.0 | 11.8 | 93.5 | 141 |

Possibility and Utility

According to the present invention, in the production of poly $\alpha$-olefins with a high MFR, e.g. at least 50 g/10 min, preferably 70 g/10 min, more preferably 100 g/10 min, the poly $\alpha$-olefins can be produced in a

high yield while maintaining a high stereoregularity represented by a hot heptane insoluble (HI) of at least 96 % even when using a large amount of hydrogen as a molecular weight regulator. Furthermore, in spite of that the silane compound used in the present invention has no aromatic groups, there can be obtained good catalytic performances comaparable or superior to in the case of using silane compounds having aromatic groups.

## Claims

1. A process for the production of poly α-olefins comprisng polymerizing α-olefins in the presence of a catalyst composed of (A) a solid catalsyt compnent comprising, as essential components, a metal oxide, magnesium, titanium, a halogen and an electron-donating compound, (B) an organometal compound and (C) an ethoxy group-containing silane compound represented by the general formula $R_n Si(OC_2H_5)_{4-n}$ wherein R is an aliphatic hydrocarbon group with 3 to 10 carbon atoms and n is 1 or 2 and having a volume, calculated by the quantum chemistry calculation, of 200 to 500 $Å^3$ and an electron density of oxygen atoms in the ethoxy group, calculated similarly, ranging from 0.680 to 0.800 A. U. (atomic unit).

# INTERNATIONAL SEARCH REPORT

International Application No PCT/JP90/01222

**I. CLASSIFICATION OF SUBJECT MATTER** (if several classification symbols apply, indicate all) [6]

According to International Patent Classification (IPC) or to both National Classification and IPC

Int. $Cl^5$ C08F10/00, C08F4/654

**II. FIELDS SEARCHED**

Minimum Documentation Searched [7]

| Classification System | Classification Symbols |
|---|---|
| IPC | C08F10/00, C08F4/64-4/658 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 62-119203 (Idemitsu Petrochemical Co., Ltd.), 30 May 1987 (30. 05. 87), Claim & EP, A, 206172 & FI, A, 8602585 | 1 |
| Y | JP, A, 63-223008 (Mitsui Petrochemical Industries, Ltd.), 16 September 1988 (16. 09. 88), Claim and line 16, lower part, left column to line 3, lower part, right column, page 7 & EP, A, 282341 & CN, A, 8801916 | 1 |
| Y | JP, A, 63-27517 (Mitsui Petrochemical Industries, Ltd.), 5 February 1988 (05. 02. 88), Claim and lines 10 to 12, lower part, left column, page 7 & EP, A, 276323 | 1 |
| Y | JP, A, 62-11706 (Mitsubishi Petrochemical | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 13, 1990 (13. 11. 90) | December 10, 1990 (10. 12. 90) |

| International Searching Authority | Signature of Authorized Officer |
|---|---|
| Japanese Patent Office | |

FURTHER INFORMATION CONTINUED FROM THE SECOND SHEET

| | | |
|---|---|---|
| | Co., Ltd.), 20 January 1987 (20. 01. 87), Claim and line 1, upper part, right column to line 1, lower part, right column, page 8 (Family: none) | |
| Y | JP, A, 64-33106 (Mitsubishi Petrochemical Co., Ltd.), 3 February 1989 (03. 02. 89), Claim and line 2, upper part to line 1, upper part, left column, page 6 (Family: none) | 1 |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

**FURTHER INFORMATION CONTINUED FROM THE SECOND SHEET**

| | | |
|---|---|---|
| A | JP, A, 62-177003 (Toho Titanium Co., Ltd.), 3 August 1987 (03. 08. 87), Claim (Family: none) | 1 |
| A | JP, A, 60-44507 (Toho titanium Co., Ltd.), 9 March 1985 (09. 03. 85), Claim & BE, A, 899855 & DE, A, 3425407 & GB, A, 2143834 & FR, A, 2553421 & US, A, 4547476 | 1 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers , because they relate to subject matter not required to be searched by this Authority, namely:

2.☐ Claim numbers . . . , because they relate to parts of the international application that do not comply with the prescribed requirements to such an extent that no meaningful international search can be carried out, specifically:

3.☐ Claim numbers ........ , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.